# EUROPÄISCHE PATENTSCHRIFT

(11) **EP 2 543 538 B1**
(45) Veröffentlichungstag und Bekanntmachung des Hinweises auf die Patenterteilung: **20.01.2016**
(21) Anmeldenummer: 12169981.3
(22) Anmeldetag: 30.05.2012
(51) Int. Cl.: B60N 2/015, B60N 2/20, B60N 2/30

(54) **Kraftfahrzeugsitz**
Motor vehicle seat
Siège de véhicule automobile

(30) Priorität: 03.07.2011 DE 102011107909
(43) Veröffentlichungstag der Anmeldung: 09.01.2013
(73) Patentinhaber: Magna Seating (Germany) GmbH, 63877 Sailauf (DE)
(72) Erfinder: Kuliha, Norbert, 75181 Pforzheim (DE)
(74) Vertreter: Völger, Silke Beatrix

(56) Entgegenhaltungen:
- WO-A1-00/21778
- DE-A1-102009 033 035
- JP-A- 2000 102 438
- US-A1- 2002 027 383

## Beschreibung

Die vorliegende Erfindung betrifft eine entnehmbare Sitzanordnung für ein Kraftfahrzeug und insbesondere für einen Kleinbus oder Kastenwagen.

In Kombinations-Kraftfahrzeugen, die üblicherweise als "Van" bezeichnet werden, Kleinbussen oder Kastenwagen ist die zweite bzw. dritte Sitzreihe häufig zusammenlegbar ausgestaltet. Dies ermöglicht ein Einsteigen und Aussteigen der Fahrzeuginsassen der dritten Sitzreihe. Des Weiteren wird eine einfache Vergrößerung des Gepäckraums ohne Ausbau der Sitzreihe möglich. Eine derartige Sitzanordnung zeigt beispielsweise die Druckschrift US 2002 / 0027383 A1. In der Regel wird beim Zusammenlegen der Sitzreihe die Rückenlehne über die Sitzfläche abgelegt und der gesamte Sitz anschließend über eine Schwenkachse im vorderen Bereich der Sitzbasis nach vorne aufgestellt. Üblicherweise sind derartige Sitzanordnungen auch entnehmbar ausgeführt, um eine möglichst variable Gestaltung des Innenraums des Kraftfahrzeugs erzielen zu können.

Eine gattungsgemässe, entnehmbare Sitzanordnung ist aus der WO 00/21778 A1 bekannt. Diese entnehmbare Sitzanordnung weist einen Sockel mit Verriegelungsmitteln zur lösbaren Anbindung an den Innenboden eines Kraftfahrzeugs auf. Weiterhin ist eine Sitzstruktur mit einem daran angeordneten Sitzkissen und einer daran angeordneten verstellbaren und auf dem Sitzkissen ablegbaren Rückenlehne vorgesehen, wobei die Sitzstruktur im Bereich des vorderen Abschnitts des Sitzkissens an dem Sockel oder dem Fahrzeugboden gelenkig um eine Verschwenkachse angeschlagen ist, um nach dem Ablegen der Rückenlehne aus der Gebrauchslage in eine aufrechte oder überkippte Verstaulage verlagerbar zu sein. Eine Erleichterung des Aufstellens der Sitzstruktur aus der Gebrauchs- in die Verstaulage für den Benutzer wird durch eine Federeinrichtung erzielt. Diese Federeinrichtung bewirkt ein selbsttätiges Aufstellen der Sitzanordnung in die Verstauposition.

Es ist eine Aufgabe der vorliegenden Erfindung, eine entnehmbare Sitzanordnung für ein Kraftfahrzeug zu schaffen, die eine verbesserte Handhabung für den Fahrzeugnutzer beim Zusammenlegen in die Verstauposition und Herausnehmen der Sitzanordnung ermöglicht.

Diese Aufgabe löst die vorliegende Erfindung durch eine entnehmbare Sitzanordnung mit den Merkmalen des Anspruch 1.

Noch weitere vorteilhafte Ausgestaltungen der vorliegenden Erfindung sind in den jeweiligen Unteransprüchen angegeben.

Bevorzugte Ausführungsformen der vorliegenden Erfindung werden nachfolgend beispiefshalber beschrieben, wobei auf die anhängenden Zeichnungen Bezug genommen wird. Darin zeigen:
- Fig. 1: eine perspektivische schematische Ansicht einer Sitzstruktur einer Sitzanordnung der vorliegenden Erfindung in einer Gebrauchslage;
- Fig. 2: eine perspektivische schematische rückwärtige Ansicht der Sitzstruktur gemäß Fig.1 in einer Verstaulage;
- Fig. 3a: eine perspektivische Detailansicht der Anbindungsstelle des Sockels, sowie eine Spiralfeder als Federeinrichtung in einer Ansicht von vorne;
- Fig. 3b: eine perspektivische Detailansicht der Anbindungsstelle gemäß Fig. 3a in einer rückwärtigen Ansicht;
- Fig. 4: eine perspektivische schematische Detailansicht des Bereichs des vorderen Abschnitts des Sitzkissens und der Anbindungsstelle in der Verstauposition;
- Fig. 5: eine perspektivische schematische Ansicht einer weiteren Ausführungsvarianten einer Sitzstruktur einer Sitzanordnung in einer ersten Verstaulage mit nach vorne geklappter Rückenlehne;
- Fig. 6: eine perspektivische schematische Seitenansicht eines Details der Sitzanordnung nach Fig. 5 im Bereich des vorderen Abschnitts des Sitzkissens und der Verschwenkachse mit Federeinrichtung und Begrenzungsmittel;
- Fig. 7: eine perspektivische Detailansicht der Federeinrichtung gemäß Fig. 6 mit einer Drehführung
- Fig. 8: die Detailansicht der Fig. 7 in einer Vorderansicht, und
- Fig. 9: eine perspektivische schematische Seitenansicht des Bereichs der vorderen Anbindungsstelle.

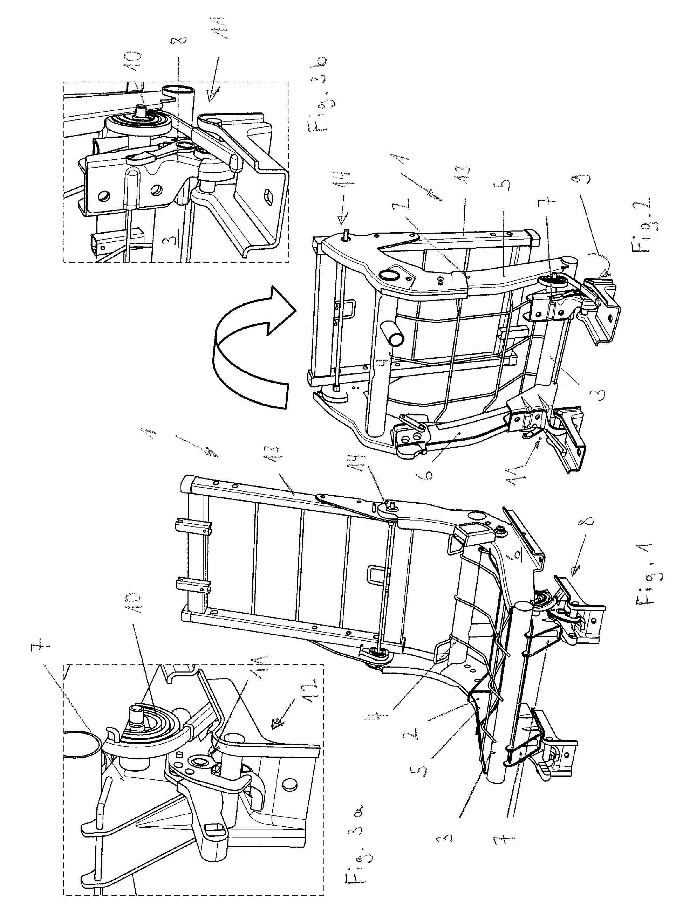

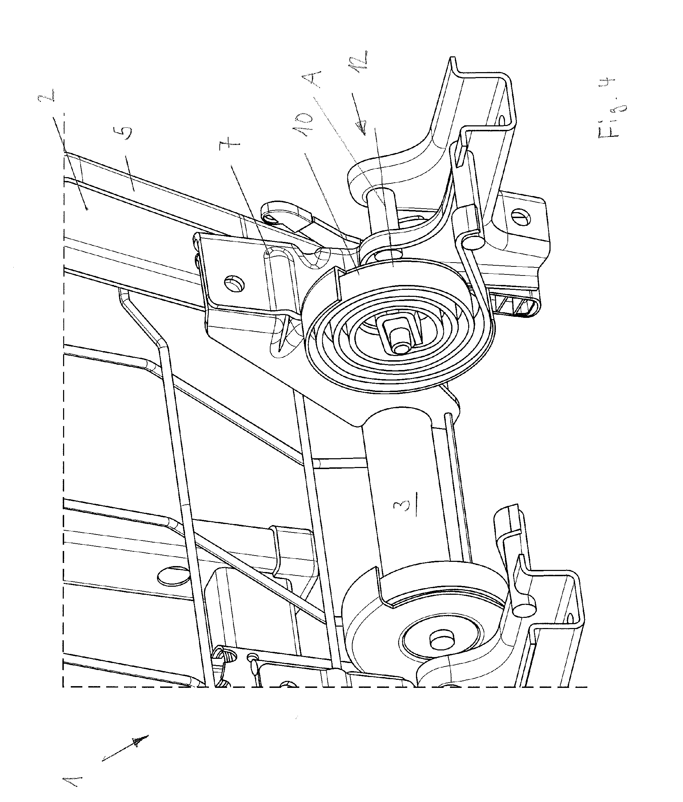

Die Figuren Figuren 1 bis 4 zeigen eine erste bevorzugte Ausführungsform einer entnehmbaren Sitzanordnung 1, die üblicherweise in der zweiten oder dritten Sitzreihe eines Vans angeordnet ist.

Die entnehmbare Sitzanordnung 1 umfasst ein Sitzkissen mit einem Sitzpolster und einem zugeordneten Teil einer als Sitzstruktur ausgebildeten ersten Tragstruktur 2. Der dem Sitzkissen zugeordnete Teil der ersten Tragstruktur 2 erstreckt sich im Wesentlichen innerhalb des Sitzpolsters und verleiht diesem die für den vorgesehenen Gebrauch erforderliche mechanische Stabilität. Aus der Zeichnung lässt sich erkennen, dass die Tragstruktur 2 in der Art eines Gestells oder Rahmenwerks ausgebildet ist. Das Rahmenwerk umfasst dabei eine vordere und eine hintere rohrförmige Querstrebe 3,4 sowie die Querstreben verbindende Seitenwangen 5,6. Vorzugsweise im vorderen (der in Fahrtrichtung weisende Bereich, dargestellt durch den Pfeil P) unteren Bereich des Sitzkissens setzt sich die erste Tragstruktur 2 in einer Anzahl von abstehenden Stützstreben 7 fort, die zweckmäßig in annähernd rechtem Winkel oder mit leichter Neigung dazu gegenüber der Ebene der Auflagefläche des Sitzpolsters ausgerichtet sind. Die Stützstreben 7 sind randseitig an der vorderen Querstrebe 3 im Bereich der Seitenwangen 5, 6 ausgeführt. Die entnehmbare Sitzanordnung bzw. die Stützstreben 7 der ersten Tragstruktur 2 umfassen einen Sockel 8 und dienen zur lösbaren Anbindung der zusammenlegbaren Sitzanordnung 1 an einem Fahrzeugkörper. Des Weiteren ist diese Anbindung der Sitzanordnung 1 im vorderen Bereich dazu eingerichtet, ein Verschwenken der Sitzstruktur im Bereich des vorderen Abschnitts des Sitzkissens an den Sockeln 8 um eine Verschwenkachse A zu ermöglichen. Dies ist in der Figur 2 durch den Pfeil 9 dargestellt. Der Sockel 8 kann dabei sowohl ein der Sitzanordnung 1 zugeordnetes Bauteil, als auch ein dem Innenboden des Kraftfahrzeugs zugeordnetes Bauteil sein.

Um ein Verschwenken der Sitzanordnung 1 von der Gebrauchslage in die Verstaulage zu erleichtern, ist eine Federeinrichtung 10 zum Vorspannen der Sitzstruktur 1 in Bezug auf eine Verschwenkbewegung gemäß Pfeil 9 zu der Verstaulage vorgesehen. Als Federeinrichtungen können bekannte Federmittel beispielsweise Spiralfedern, Schenkelfedern etc. eingesetzt werden. Weiterhin sind Begrenzungsmittel zum Begrenzen der Wirkung der Federeinrichtung 10 auf einem ersten Abschnitt der Verschwenkbewegung nach dem Verlassen der Verstauposition vorgesehen. Im gezeigten Ausführungsbeispiel sind als Federmittel Spiralfedern vorgesehen, die jeweils auf einer Lagerachse 15 beidseits der Sockel 8 bzw. der Lagerstellen angeordnet sind. Ein Endbereich 16 der Spiralfeder 10 ist an dem Sockel 8 bzw. der Lagerstelle der ersten Tragstruktur 2 festgelegt, der zweite Endbereich 17 der Spiralfeder 10 stützt sich auf einem fahrzeugbodenseitigen Verbindungsteil 12 ab.

Die Stützstreben 7 sind als vordere Lagerstellen ausgeführt und weisen jeweils ein Verbindungsteil 11 zur Anbindung an einem zugeordneten fahrzeugbodenseitigen Verbindungsteil 12 auf. Die Verbindung ist derart ausgestaltet, dass ein Verschwenken der ersten Tragstruktur 2 möglich ist. In der in Fig.1 dargestellten Gebrauchslage ist die Verbindung zwischen dem ersten Verbindungsteil 11 und dem zugeordneten fahrzeugbodenseitigen Verbindungsteil 12 durch eine Drehsperre 17 gegenüber dem vorgesehenen Verschwenken blockierbar. Die Drehsperre 17 kann dabei Verriegelungs- und Entriegelungselemente umfassen. Vorzugsweise sind die Verriegelungs- und Entriegelungsmittel als Schlösser ausgebildet, die eine Drehfalle und eine zugeordnete Sperrklinkenanordnung umfassen. Die lösbare Verriegelung der ersten Tragstruktur 2 gegenüber einem Verschwenken ergibt sich dabei in bekannter Weise durch ein Zusammenwirken einer an dem ersten Verbindungsteil angeordneten Schließfalle mit einem an dem fahrzeugbodenseitigen Verbindungsteil 9 angeordneten Schließglied, nämlich einem Querbolzen 18.

Im hinteren Bereich des Sitzkissens im Bereich der Seitenwangen 5, 6 sind weiterhin Mittel zur lösbaren Anbindung der Sitzanordnung 1 an dem Fahrzeugkörper ausgebildet. Diese Mittel weisen jeweils ein Verbindungsteil zur lösbaren Anbindung an einem zugeordneten fahrzeugbodenseitigen Verbindungsteil auf. In der in Fig.1 dargestellten Gebrauchslage ist die Verbindung zwischen dem ersten Verbindungsteil und dem zugeordneten fahrzeugbodenseitigen Verbindungsteil über bekannte Verriegelungselemente und Entriegelunselemente 19 ausgebildet. Vorzugsweise sind die Verriegelungs- und Entriegelungsmittel 19 als Schlösser ausgebildet, die eine Schließfalle und eine zugeordnete Sperrklinkenanordnung umfassen. Die lösbare Verriegelung des hinteren Bereichs der Tragstruktur 2 an dem Innenboden des Kraftfahrzeugs ergibt sich dabei in bekannter Weise durch ein Zusammenwirken einer an dem ersten Verbindungsteil angeordneten Schließfalle mit einem an dem fahrzeugbodenseitigen Verbindungsteil angeordneten Schließglied, nämlich einem Querbolzen.

Die Sitzanordnung 1 weist des Weiteren eine Rückenlehne 13 auf, die im hinteren Bereich des Sitzkissens verstellbar angebunden ist. Die Rückenlehne 13 weist eine zweite Tragstruktur auf, die ebenfalls in der Art eines Gestells oder Rahmenwerks ausgebildet ist. Die zweite Tragstruktur ist dazu ausgebildet das Rückenlehnenpolster zu tragen und mechanisch zu versteifen. Das Rückenlehnenpolster ist ebenfalls in den Zeichnungen nicht dargestellt. Aus der Darstellung der Figuren 1 und 2 kann man erkennen, dass die Rückenlehne in ihrem randseitigen Bereich über eine verschwenkbare Gelenkverbindung 14 an den Seitenwangen 5, 6 des Sitzkissens angebunden ist.

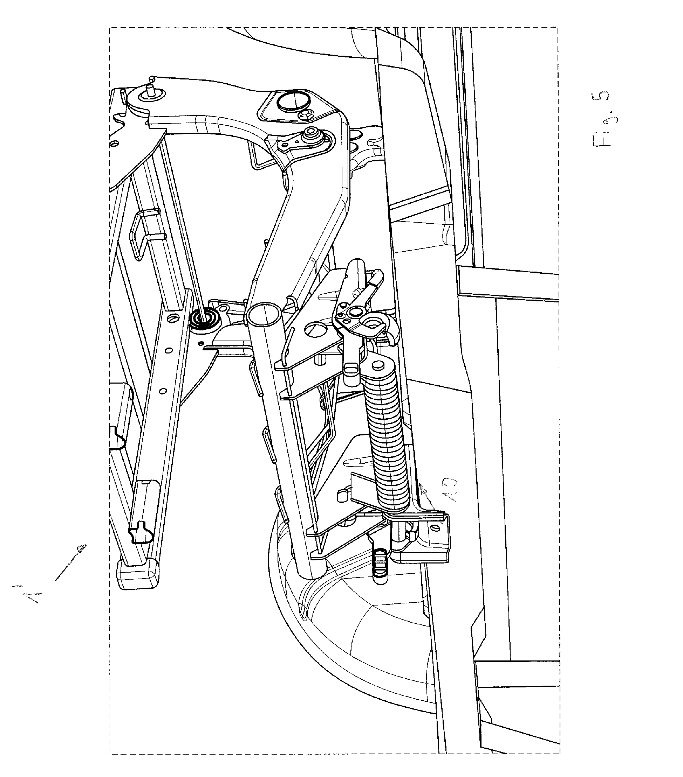

Zur Vergrößerung des Stauraums des Kraftfahrzeugs kann die Sitzanordnung 1 zunächst in eine sogenannte erste Verstaulage gebracht werden. Diese Verstaulage ist in der Fig. 5 dargestellt. Hierfür wird zunächst durch eine nicht näher gezeigte und beschriebene Entriegelungsvorrichtung die Anbindung der Rückenlehne 13 an der ersten Tragstruktur entriegelt und nach vorne auf das Sitzkissen geklappt. In dieser Position weist die Rückenlehne 13 eine nahezu waagrechte Position auf. Nachdem diese erste Verstaulage erreicht ist, kann die Arretierung der Verbindungsteile der Anbindung der Sitzanordnung im hinteren Bereich der Seitenwangen 5, 6 der ersten Tragstruktur an dem zugeordneten fahrzeugbodenseitigen Verbindungsteil entriegelt werden. Die Sitzanordnung 1 kann nun ausgehend von dieser Position mit auf das Sitzkissen geklappter Rückenlehne in die gewünschte Verstaulage (Packagestellung) verschwenkt werden. Dabei lösen sich zunächst die Verbindungsteile der hinteren Anbindungsstellen der ersten Tragstruktur aus der fahrzeugbodenseitigen Verbindung und die Sitzstruktur wird im hinteren Bereich angehoben. Die Sitzanordnung 1 führt eine Schwenkbewegung um die im vorderen unteren Bereich der Sitzstruktur angeordneten Verschwenkachse A aus. Diese Schwenkbewegung ist in der Figur 2 durch den Pfeil S dargestellt. Aufgrund der nachfolgend beschriebenen Anordnung und Ausgestaltung der Federeinrichtung, durch die die Sitzstruktur in Bezug auf die Verschwenkbewegung vorgespannt ist, ist ein erleichtertes Verbringen der Sitzstruktur aus der Gebrauchs- in die Verstaulage und anschließendes Herausnehmen der Sitzanordnung 1 möglich. Wenn sich die Sitzanordnung 1 gemäß Fig. 2 in der zusammengelegten Einstellung (Verstaulage) befindet, nehmen das Sitzkissen und die Rückenlehne eine ungefähr aufrecht gestapelte Stellung ein. Die Gebrauchslage ist in der Fig. 1 dargestellt und ist die beim Gebrauch des Kraftfahrzeugsitzes übliche Position des Kraftfahrzeugsitzes mit hochgeklappter Rückenlehne.

Zur Vergrößerung des Gepäckraums kann nun die zusammengelegte Sitzanordnung 1 aus dem Fahrzeuginnenraum entnommen werden. Aufgrund der Schwenkbewegung der Sitzstruktur um die Verschwenkachse A werden die über Verriegelungshebel blockierte Lagerachse freigegeben, und ein Herausnehmen der kompletten Sitzanordnung aus dem fahrzeugseitigen Verbindungsteil ist möglich. Das Herausnehmen der Sitzanordnung 1 ist des Weiteren aufgrund der Aufhebung der Federvorspannung einfach möglich.

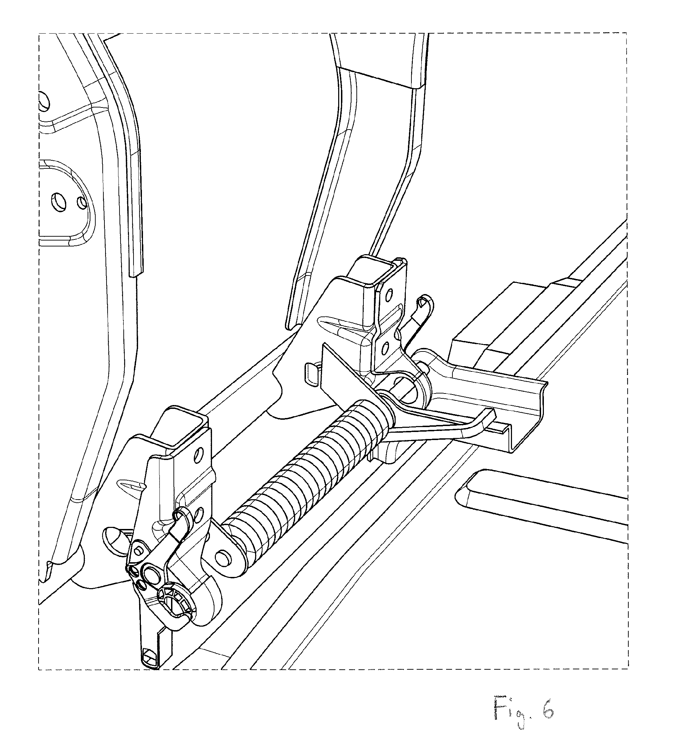

Die in den Figuren 5-9 dargestellte weitere Ausführungsvariante einer erfindungsgemäßen Sitzanordnung 1' unterscheidet sich von der zuvor beschriebenen Sitzanordnung in der Ausführungsform und Anordnung der Federeinrichtung 10. Gleiche bereits zuvor beschriebene Teile werden nachfolgend mit den gleichen Bezugszeichen benannt und in den Figuren gekennzeichnet. Aus den Figuren 5-7 ist zu erkennen, dass die Federeinrichtung eine vorzugsweise entlang der Verschwenkachse A der gelenkigen Anbindung der Sitzstruktur am Sockel 8 verlaufende Torsionsfeder 20 umfasst. Hierzu ist im Bereich der vorderen Querstrebe 3 eine parallel unterhalb der Querstrebe verlaufende die Lagerstellen der Sockel 8 verbindende Wickelachse 21 angeordnet. Diese Wickelachse 21 ist fluchtend zu der Verschwenkachse A vorgesehen und dient der Aufnahme der Schenkelfeder als Federeinrichtung 10. Ein Endbereich der Schenkelfeder ist dabei mit der Sitzstruktur verbunden, dass andere Ende 22 der Schenkelfeder stützt sich an der fahrzeugbodenseitigen Anbindungsstelle 12 ab. Bei der Ausführungsform, bei der die Wickelachse mit der Schwenkachse der Sitzstruktur zusammenfällt, ist es von Vorteil, dass sich der Endbereich der Abstützung Schenkelfeder auf der bodenseitigen Anbindungsstelle nicht verändert.

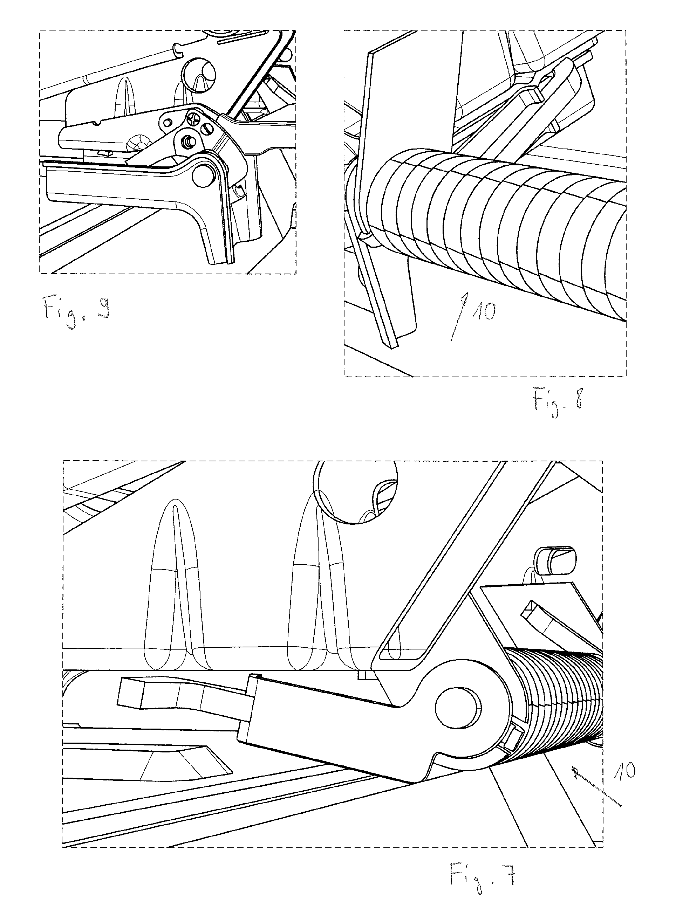

Des Weiteren sind aus der Darstellung der Figur 7 die Begrenzungsmittel 23 zum Begrenzen der Wirkung der Federeinrichtung 10 auf einem ersten Abschnitt der Verschwenkbewegung nach dem Verlassen der Verstauposition dargestellt. Hierbei schließt der erste Abschnitt das Überschlagen des Schwerpunkts der Sitzstruktur und der darauf abgelegten Rückenlehne über den oberen Totpunkt ein. Dieser obere Totpunkt ist definiert als der von der Schwerkraft eingeprägten Drehmomente. Diese sind als an der Sitzstruktur angeordnete Anschläge 23 ausgebildet, die bei einem Verschwenken der Sitzstruktur nach einem vorbestimmten Verschwenkwinkel an den zweiten Endbereich 22 der Schenkelfeder anschlagen und die bodenseitige Abstützung der Schenkelfeder aufheben. Hierdurch wird die Federwirkung aufgehoben und die Sitzstruktur lässt sich im weiteren Verschwenkbereich ohne Federvorspannung weiter verschwenken und anschließend sehr einfach herausnehmen. Diese Situation ist in der Fig. 7 dargestellt.

Diese Anschläge 23 laufen innerhalb des vom Außendurchmesser der Federeinrichtung vorgegebenen Zylinders um. Hierdurch wird eine platzsparende Bauweise erzielt. Des Weiteren ist der am Sockel 8 abstützbare Schenkel 22 der Federeinrichtung 10 in einer Drehführung 25 mit definierter Schwenkachse "B" gehalten. Diese Schwenkachse fällt vorzugsweise mit der Schwenkachse A der Sitzstruktur zusammen.

Um eine Verschwenkbegrenzung der Sitzstruktur zu erzielen, sind im Bereich der Lagerstellen Endanschläge 24 vorgesehen, die ab einem bestimmten maximalen Verschwenkwinkel die weitere Drehung der Sitzstruktur blockieren. Hierzu schlagen die Endanschläge an fahrzeugbodenseitige Flächen an, die vorzugsweise in einer bodenseitigen Vertiefung vorgesehen sind. Dies ist zeichnerisch nicht näher dargestellt.

## Patentansprüche

1. Entnehmbare Sitzanordnung (1,1') für ein Kraftfahrzeug, aufweisend
- einen Sockel (8) mit Verriegelungsmitteln (17, 19) zur lösbaren Anbindung an den Innenboden eines Kraftfahrzeugs,
- eine Sitzstruktur (2) mit einem daran angeordneten Sitzkissen und einer daran angeordneten verstellbaren und auf dem Sitzkissen ablegbaren Rückenlehne (13), wobei die Sitzstruktur (2) im Bereich des vorderen Abschnitts (3) des Sitzkissens an dem Sockel (8) oder dem Fahrzeugboden gelenkig um eine Verschwenkachse (A) verschwenkbar angeschlagen ist, um nach dem Ablegen der Rückenlehne (13) aus der Gebrauchslage in eine aufrechte oder überkippte Verstaulage verlagerbar zu sein,
- eine Federeinrichtung (10) zum Vorspannen der Sitzstruktur (2) in Bezug auf eine Verschwenkbewegung zu der Verstaulage, um dem Benutzer das Verbringen der Sitzstruktur (2) aus der Gebrauchs- in die Verstaulage zu erleichtern,
**dadurch gekennzeichnet,**
- **dass** die entnehmbare Sitzanordnung Begrenzungsmittel (23) zum Begrenzen der Wirkung der Federeinrichtung (10) auf einem ersten Abschnitt der Verschwenkbewegung nach dem Verlassen der Verstauposition umfasst.

2. Entnehmbare Sitzanordnung (1, 1') gemäß Anspruch 1, wobei der erste Abschnitt das Überschlaaen des Schwerpunkts der Sitzstruktur (2) und der darauf abaeleaten Rückenlehne (13) über einem oberen Totpunkt einsch4ießt.

3. Entnehmbare Sitzanordnung (1, 1') gemäß Anspruch 1 oder Anspruch 2, wobei die Federeinrichtung (10) eine vorzugsweise entlang der Verschwenkachse (A) der gelenkigen Anbindung der Sitzstruktur (2) am Sockel (8) oder dem Fahrzeugboden verlaufende Torsionsfeder und insbesondere eine Drehstabfeder, eine Schraubentorsionsfeder oder eine Spiraltorsionsfeder umfasst.

4. Entnehmbare Sitzanordnung (1, 1') gemäß einem der Ansprüche 1 bis 3, wobei die Begrenzungsmittel (23) eine Seite der Abstützung der Federeinrichtung (10) am Sockel (8) und an der Sitzstruktur bzw. dem Fahrzeugboden nach dem Überschreiten des ersten Abschnitts aufheben.

5. Entnehmbare Sitzanordnung nach einem der Ansprüche 1 bis 4, wobei die Federeinrichtung (10) mit einem abstehenden Schenkel am Sockel (8) oder einem fahrzeugbodenseitigen Verbindungsteil (12) abstützbar ist.

6. Entnehmbare Sitzanordnung gemäß Anspruch 5, wobei die Abstützung der Federeinrichtung am Sockel bzw. dem fahrzeugbodenseitigen Verbindungsteil (12) durch einen von der Sitzbasis mitbewegten Anschlag (23) aufgehoben wird.

7. Entnehmbare Sitzanordnung gemäß Anspruch 6, wobei der Anschlag (23) innerhalb des vom Außendurchmesser der Federeinrichtung (10) vorgegebenen Zylinders umläuft.

8. Entnehmbare Sitzanordnung nach einem der Ansprüche 4 bis 6, wobei der am Sockel bzw. dem fahrzeupseitigen Verbindunqsteil abstützbare Schenkel der Federeinrichtung (10) in einer Drehführung (25) mit einer definierten Schwenkachse (B) gehalten ist.

9. Entnehmbare Sitzanordnung gemäß Anspruch 8, wobei die Schwenkachse (B) der Drehführung (25) mit der Schwenkachse (A) der Sitzstruktur zusammen fällt.

## Claims

1. Removable seat arrangement (1, 1') for a motor vehicle, having
- a base (8) with locking means (17, 19) for the releasable connection to the inside floor of a motor vehicle,
- a seat structure (2) with a seat cushion arranged thereon and with an adjustable backrest (13) which is arranged thereon and can be laid down on the seat cushion, wherein the seat structure (2) is attached in an articulated manner in the region of the front portion (3) of the seat cushion to the base (8) or to the vehicle floor in a manner so as to be pivotable about a pivot axis (A) in order, after the backrest (13) has been laid down, to be shiftable from the use position into an upright or tipped-over storage position,
- a spring device (10) for pretensioning the seat structure (2) with respect to a pivoting movement to the storage position, in order to make it easier for the user to bring the seat structure (2) from the use position into the storage position,
**characterized**
- **in that** the removable seat arrangement comprises limiting means (23) for limiting the action of the spring device (10) in a first portion of the pivoting movement after leaving the storage position.

2. Removable seat arrangement (1, 1') according to Claim 1, wherein the first portion includes the crossing of the centre of gravity of the seat structure (2) and of the backrest (13) laid down thereon over an upper dead centre.

3. Removable seat arrangement (1, 1') according to Claim 1 or Claim 2, wherein the spring device (10) comprises a torsion spring preferably running along the pivot axis (A) of the articulated connection of the seat structure (2) to the base (8) or the vehicle floor and, in particular, a torsion bar spring, a helical torsion spring or a spiral torsion spring.

4. Removable seat arrangement (1, 1') according to one of Claims 1 to 3, wherein the limiting means (23) neutralize one side of the support of the spring device (10) on the base (8) and on the seat structure or the vehicle floor once the first portion has been exceeded.

5. Removable seat arrangement according to one of Claims 1 to 4, wherein the spring device (10) is supportable by a protruding limb on the base (8) or on a vehicle-floor-side connecting part (12).

6. Removable seat arrangement according to Claim 5, wherein the support of the spring device on the base or on the vehicle-floor-side connecting part (12) is neutralized by a stop (23) moved at the same time by the seat base.

7. Removable seat arrangement according to Claim 6, wherein the stop (23) revolves within the cylinder predetermined by the outside diameter of the spring device (10).

8. Removable seat arrangement according to one of Claims 4 to 6, wherein that limb of the spring device (10) which is supportable on the base or on the vehicle-side connecting part is held in a rotary guide (25) having a defined pivot axis (B).

9. Removable seat arrangement according to Claim 8, wherein the pivot axis (B) of the rotary guide (25) coincides with the pivot axis (A) of the seat structure.

## Revendications

1. Agencement de siège amovible (1, 1') pour un véhicule automobile, présentant
- un socle (8) avec des moyens de verrouillage (17, 19) pour la liaison amovible au plancher intérieur d'un véhicule automobile,
- une structure de siège (2) avec un coussin de siège disposé sur celle-ci et un dossier (13) réglable disposé sur celle-ci et pouvant être posé sur le coussin de siège, la structure de siège (2) étant attachée dans la région de la partie avant (3) du coussin de siège au socle (8) ou au plancher du véhicule de manière articulée autour d'un axe de pivotement (A), afin de pouvoir être déplacée après la pose du dossier (1.3) depuis la position d'utilisation dans une position de rangement verticale ou basculée,
- un dispositif de ressort (10) pour précontraindre la structure de siège (2) par rapport à un mouvement de pivotement dans la position de rangement, afin de faciliter à l'utilisateur le déplacement de la structure de siège (2) depuis la position d'utilisation dans la position de rangement,
**caractérisé en ce que**
- l'agencement de siège amovible comprend des moyens de limitation (23) pour limiter l'effet du dispositif de ressort (10) à une première partie du mouvement de pivotement après la sortie de la position de rangement.

2. Agencement de siège amovible (1, 1') selon la revendication 1, dans lequel la première partie inclut le dépassement du centre de gravité de la structure de siège (2) et du dossier (13) posé sur celle-ci au-delà d'un point mort haut supérieur.

3. Agencement de siège amovible (1, 1') selon la revendication 1 ou la revendication 2, dans lequel le dispositif de ressort (10) comprend un ressort de torsion s'étendant de préférence le long de l'axe de pivotement (A) de la liaison articulée de la structure de siège (2) au socle (8) ou au plancher du véhicule, et en particulier un ressort à barre de torsion, un ressort de torsion hélicoïdal ou un ressort de torsion spiral.

4. Agencement de siège amovible (1, 1') selon l'une quelconque des revendications 1 à 3, dans lequel les moyens de limitation (23) suppriment un côté de l'appui du dispositif de ressort (10) sur le socle (8) et sur la structure de siège ou le plancher du véhicule après le dépassement de la première partie.

5. Agencement de siège amovible selon l'une quelconque des revendications 1 à 4, dans lequel le dispositif de ressort (10) peut s'appuyer avec une branche saillante sur le socle (8) ou sur une partie de liaison (12) du côté du plancher du véhicule.

6. Agencement de siège amovible selon la revendication 5, dans lequel l'appui du dispositif de ressort sur le socle ou sur la partie de liaison (12) du côté du plancher du véhicule est supprimé par une butée (23) entraînée par la base du siège.

7. Siège amovible selon la revendication 6, dans lequel la butée (23) tourne à l'intérieur du cylindre prédéfini par le diamètre extérieur du dispositif de ressort (10).

8. Agencement de siège amovible selon l'une quelconque des revendications 4 à 6, dans lequel la branche du dispositif de ressort (10) pouvant être supportée sur le socle ou sur la partie de liaison du côté du véhicule est retenue dans un guide rotatif (25) avec un axe de pivotement défini (B).

9. Agencement de siège amovible selon la revendication 8, dans lequel l'axe de pivotement (B) du guide rotatif (25) coïncide avec l'axe de pivotement (A) de la structure de siège.
